# EUROPÄISCHE PATENTSCHRIFT

(11) **EP 0 951 834 B1**
(45) Veröffentlichungstag und Bekanntmachung des Hinweises auf die Patenterteilung: **21.08.2002**
(21) Anmeldenummer: 99108832.9
(22) Anmeldetag: 04.05.1999
(51) Int. Cl.: A23G 1/18

(54) **Vorrichtung zum kontinuierlichen Aufbereiten von zu verarbeitenden kakaobutterhaltigen oder ähnlichen fetthaltigen Massen**
Apparatus for continuous preparation and processing of cacao or similar fat containing masses
Appareil de préparation et mise en oeuvre de masses contenant du cacao ou des graisses analogues

(30) Priorität: 24.11.1998 DE 19854204
(43) Veröffentlichungstag der Anmeldung: 27.10.1999
(73) Patentinhaber: Sollich KG, 32105 Bad Salzuflen (DE)
(72) Erfinder: Heyde, Hans, 49134 Wallenhorst (DE)
(74) Vertreter: Patentanwälte Rehberg + Hüppe

(56) Entgegenhaltungen:
- EP-A- 0 685 168
- EP-A- 0 893 066
- WO-A-92/00015
- BE-A- 524 549
- GB-A- 2 088 541
- US-A- 1 971 314
- US-A- 4 648 315
- US-A- 4 859 483
- US-A- 5 188 853
- PATENT ABSTRACTS OF JAPAN vol. 018, no. 012 (C-1150), 11. Januar 1994 (1994-01-11) & JP 05 252874 A (MATSUSHITA ELECTRIC IND CO LTD), 5. Oktober 1993 (1993-10-05)

## Beschreibung

Die Erfindung betrifft eine Vorrichtung zum kontinuierlichen Aufbereiten von zu verarbeitenden kakaobutterhaltigen oder ähnlichen fetthaltigen Massen, insbesondere Schokolademasse, mit einer Temperiersäule, die mehrere, einen Zylinder bildende, übereinander angeordnete Kammern aufweist, wobei jede Kammer an einen Kreislauf für ein Temperiermedium angeschlossen ist, und je zwischen zwei benachbarten Kammern ein in der Regel im wesentlichen von Temperierflächen der beiden Kammern begrenzter und von der Masse durchströmter Temperierraum vorgesehen ist, in dem ein mit einer Antriebswelle verbundenes Mischwerkzeug angeordnet ist, wobei zwei benachbarte Temperierräume über einen radial innen angeordneten Massedurchgang aneinander angeschlossen sind, der als die Antriebswelle umgebender Ringspalt ausgebildet ist und in den ein Temperaturfühler einragt. Die Erfindung läßt sich an sich zwischen je zwei benachbarten Massekammern anwenden, gleichgültig, ob die Massekammer einer Kühlzone oder Kühletage, einer Kristallisierzone oder -etage oder einer Nachwärmzone oder -etage zugeordnet ist. Bei dem Temperiermedium kann es sich also entweder um ein Kühlmedium oder um ein Wärmemedium handeln. In der Regel wird als Temperiermedium Wasser eingesetzt. Für die Erfindung ist es auch gleichgültig, ob die beiden der Massekammer benachbarten Kammern an gleiche oder unterschiedliche Temperierkreisläufe angeschlossen sind. Besonders sinnvoll ist die Anwendung der Erfindung aber zwischen zwei benachbarten Massekammern, die unterschiedlichen Zonen angehören, also insbesondere zwischen der Kristallisierzone und der Nachwärmzone.

Aus der WO-A-9200015 ist eine Vorrichtung zum kontinuierlichen Aufbereiten von zu verarbeitenden kakaobutterhaltigen oder ähnlichen fetthaltigen Massen, insbesondere Schokolademasse, mit zwei übereinander angeordneten und gesondert angetriebenen Temperiersäulen bekannt, wobei die eine Temperiersäule der Kühlung und die andere Temperiersäule der Wiedererwärmung der Schokolademasse dient. Die erste Temperiersäule weist mehrere, einen Zylinder bildende, übereinander angeordnete Kammern auf, wobei die jeweiligen Kammern an einen gemeinsamen Kreislauf oder auch dann an unterschiedliche Kreisläufe für ein Temperiermedium angeschlossen sind. Je zwischen zwei benachbarten Kammern ist ein in der Regel im wesentlichen von Temperierflächen der beiden Kammern begrenzter und von der Masse durchströmter Temperierraum vorgesehen, in dem ein mit einer Antriebswelle verbundenes Mischwerkzeug angeordnet ist. Zwischen zwei benachbarten Temperierräumen sind radial außen liegende Massedurchgänge mit etwa dreieckiger Gestalt vorgesehen, die um 180° gegeneinander versetzt in Durchflußrichtung der Schokolademasse von Massekammer zu Massekammer angeordnet sind. Am Übergang einer ersten Kühlzone zu einer zweiten Kühlzone der ersten Temperiersäule ist ein Temperaturfühler vorgesehen, der zur Erfassung der Temperatur der Schokolademasse dient und von außen in den radial außen angeordneten Massedurchgang einragt. Am Ende der ersten Temperiersäule ist eine von dem Kühlmedium durchflossene Kühlkammer so abgeändert, daß sie einen radial innen angeordneten Massedurchgang aufweist, der als die Antriebswelle der zweiten Temperiersäule umgebender Ringspalt ausgebildet ist und in den ein schematisch angedeuteter Temperaturfühler einragt, ähnlich wie dies auch in Fig. 3 der EP-A-0 685 168 dargestellt ist. In dieser Fig. 3 ist jedoch eine Vorrichtung mit einer einzigen durchgehenden Temperiersäule mit einer einzigen Antriebswelle dargestellt, die sich über die Kühlzonen und eine nachgeschaltete Nachwärmezone erstreckt. Auch hier sind die Massedurchgänge radial außen und in der Folge um 180° versetzt angeordnet. Es ist ein Temperaturfühler vorgesehen, der in den radial außen angeordneten Massedurchgang zwischen der letzten Kühlzone und der Nachwärmzone einragt. Nur am Ende der Temperiersäule und am Ende der Nachwärmzone ist ein radial innen angeordneter Massedurchgang oder Masseausgang vorgesehen, in den ein Temperaturfühler infolge der guten Zugänglichkeit axial einragt.

Aus der EP 0 289 849 A2, der EP 0 472 886 B1 und der EP 0 806 149 A2 sind Vorrichtungen zum kontinuierlichen Aufbereiten von z. B. Schokolademasse bekannt, die mit einer Temperiersäule arbeiten, die aus mehreren, einen Zylinder bildenden, übereinander angeordneten Kammern bestehen. Die Kammern sind teilweise an einen Kühlkreislauf für ein Kühlmedium und teilweise an einen Wärmekreislauf eines Wärmemediums angeschlossen. Zwischen zwei benachbarten Kammern wird ein Temperierraum gebildet, der von der Masse durchströmt wird und der von Temperierflächen begrenzt wird, die von den benachbarten Kammern gebildet sind. In jedem Temperierraum befindet sich ein angetriebenes Rühr- oder Mischwerkzeug, welches aus einer Nabe und einer Anzahl radial abstehender Arme besteht, wobei die Anzahl der Arme in der Regel zwischen 2 und 4 schwankt. Jeder Arm ist auf seiner Oberseite und auf seiner Unterseite mit Mischschaufeln besetzt, die auf die Masse eine Mischwirkung ausüben. Die Mischschaufeln erfüllen auch die Funktion der Abstreifer von den Temperierflächen, d. h. sie sind mit radialer Überdeckung zueinander an den Armen vorgesehen. Die Mischschaufeln können gestreckte Gestalt, aber auch konvexe oder konkave Form aufweisen. Die Formgebung und Ausrichtung der Mischschaufeln ist auf einer Seite der Arme immer gleich, während sie auf der anderen Seite der Arme ebenfalls gleich, aber entgegengesetzt ausgebildet sind. Die Arme können zusätzlich mit Durchbrechungen versehen sein, um die Durchmischungswirkung zu fördern. Die Mischschaufeln erfüllen neben der Abstreiffunktion in erster Linie eine Mischfunktion. Die wesentliche Förderung der Masse durch die Vorrichtung und damit auch von Massekammer zu Massekammer wird durch eine Massepumpe bewirkt, die die flüssige Masse durch die Vorrichtung drückt. Je zwei benachbarte Temperierräume sind über je einen Massedurchgang aneinander angeschlossen. Die Massedurchgänge sind in Förderrichtung der Masse relativ zur Achse der Temperiersäule abwechselnd radial außen und radial innen angeordnet. Jeder radial außen angeordnete Massedurchgang besteht aus einer zylindrischen Bohrung mit kreisförmigem Querschnitt, der die Kammer in axialer Richtung abgedichtet gegenüber dem Temperiermedium durchsetzt. Zur Messung und Überwachung der Temperatur der Masse wird ein Temperaturfühler benutzt, der in einen radial außen angeordneten Massedurchgang einragt. Der Temperaturfühler befindet sich dabei an einer Stelle, an der die Masse sowohl stromauf als auch stromab über zwei Temperierflächen noch temperaturmäßig beeinflußt wird, die an eine notwendigerweise von einem einzigen Temperiermedium durchströmte Kammer angrenzen. Mit diesem Temperaturfühler wird die Temperatur der Masse am Ende einer Zone, wie dies insbesondere regelungstechnisch sinnvoll ist, also nicht genau erfasst, weil sie sich stromab bis zum Ende der Zone noch weiter ändert. Die mit dem Temperaturfühler gemessene Temperatur mag repräsentativ für die tatsächliche Temperatur der Masse am Ende der Zone sein, insbesondere wenn die Vorrichtung mit Nenndurchsatz betrieben wird. Wenn jedoch die Vorrichtung mit reduzierter Leistung betrieben wird, findet eine Verlagerung und Veränderung der Strömungsverhältnisse der Masse durch die radial außen liegenden Massedurchgänge statt. Dadurch entsteht eine weitere Unsicherheit, ob die gemessene Temperatur repräsentativ für diesen Teillastbetrieb und für das Ende der Zone ist.

Nachteilig an diesen mit Mischschaufeln besetzten Rührarmen im Hinblick auf eine exakte Temperaturmessung der Masse ist weiterhin, daß sich an den verschiedensten Stellen der Massekammern Bereiche ausbilden können, in denen Masseteile ungleich lang verweilen. Dies kann stromab zwischen dem Ort der Anordnung des Temperaturfühlers und dem Ende der Zone der Fall sein. Es ist weiterhin auch nicht sichergestellt, daß die Masse, die zuerst in die Vorrichtung eintritt, auch die Vorrichtung als erstes wieder verläßt. Weiterhin besteht die Gefahr, daß durch die Ausbildung der Rührarme Masseportionen zwischen den Rührarmen durch die angetriebenen Rührarme in einer fortgesetzt kreisartigen Bewegung in der Massekammer verbleiben und an der Durchströmung der Vorrichtung nicht mehr oder nur bedingt teilnehmen. In solchen unterschiedlich bewegten Massebereichen können sich auch unterschiedliche Temperaturen der Masse ausbilden, die einerseits für ein optimales Kristallwachstum nicht förderlich sind und andererseits die Messung der Temperatur verfälschen.

Aus der EP 0 872 187 A1 ist eine Vorrichtung zum kontinuierlichen Aufbereiten von zu verarbeitenden kakaobutterhaltigen oder ähnlichen fetthaltigen Massen bekannt, bei der eine Temperiersäule aus flachen, aufeinander aufgeschichteten Elementen Anwendung findet, wobei in der Regel jeweils eine von einem Temperiermedium durchflossene Kammer mit einem Temperierraum für Masse abwechselt. Zwischen zwei Zonen mit Massekammern ist eine Wärmebarriere in Form einer isolierenden Trennwand vorgesehen. Die isolierende Trennwand ist unmittelbar entweder zwischen zwei von der Masse durchflossenen Temperierräumen oder zwischen einem Temperierraum und einer von Temperiermedium durchflossenen Kammer angeordnet. Damit wird auch die nutzbare Wärmeübergangsfläche verkleinert. Zwei benachbarte Temperierräume sind jeweils ausschließlich über einen radial außen liegenden Massedurchgang verbunden. Die Massedurchgänge sind in Förderrichtung der Masse jeweils abwechsend um 180° versetzt außen angeordnet. Ein Temperaturfühler für die Masse ragt in einen radial außen angeordneten Massedurchgang ein, der mit kreisförmigem Querschnitt die isolierende Trennwand durchsetzt. Der Temperaturfühler ist damit vorteilhaft zwischen zwei Zonen angeordnet. Im Teillastbetrieb der Vorrichtung ergibt sich aber auch hier eine Strömungsverlagerung der Masse, die die Messung der Temperatur verfälscht. Auch hier ist am Ende der Nachwärmzone ein radial innen angeordneter kreisförmiger Massedurchgang oder Masseausgang gebildet, in den ein zweiter Temperaturfühler infolge der guten Zugänglichkeit axial einragt.

Aus der US 4,648,315 ist eine Vorrichtung zum kontinuierlichen Aufbereiten von zu verarbeitenden kakaobutterhaltigen oder ähnlichen fetthaltigen Massen bekannt, bei der eine Temperiersäule aus flachen, aufeinander aufgeschichteten Elementen Anwendung findet, wobei jeweils eine von einem Temperiermedium durchflossene Kammer mit einer von der Masse durchflossene Temperierkammer abwechselt. Die Kammern sind als scheibenartige Hohlkörper ausgebildet. Die Temperierkammern sind an Temperierkreisläufe angeschlossen. Die Massekammern stehen untereinander über Massedurchgänge in Verbindung, wobei der Übertritt der Masse von einer Temperierkammer in die benachbarte Temperierkammer im Bereich des inneren Umfangs einer Antriebswelle realisiert ist, die in der Achse der Temperiersäule durch diese hindurchreicht. Damit ist der Massedurchgang zwischen zwei benachbarten Temperierräumen radial innen angeordnet und als die Antriebswelle umgebender Ringspalt ausgebildet. In jeder Temperierkammer sind zwei scheibenartige Körper vorgesehen, die über die Achse angetrieben werden. Die beiden scheibenartigen Körper besitzen auf ihrem äußeren Umfang Aussparungen für den Übertritt der Masse von der Unterseite der einen Scheibe auf die Oberseite der anderen Scheibe. Die beiden scheibenartigen Körper sind auf ihrer den Temperierflächen der benachbarten Kammern zugekehrten Seiten mit spiralartig angeordneten Abstreiferstegen versehen, die länger als der Radius der Scheibe ausgebildet sind und in einem solchen Drehsinn angeordnet sind, daß sie eine Förderwirkung auf die Masse ausüben. Zwei benachbarte spiralartige Abstreiferstege bilden einen von außen nach innen bzw. von innen nach außen durchgehenden Kanal, in welchem die Masse gefördert wird, ohne daß die Masse die Möglichkeit hätte, mit der Masse anderer Kanäle in Kontakt zu kommen oder sich auszutauschen. Die Abstreiferstege streichen berührungslos an den Temperierflächen der Kammern entlang und streifen Masse von den Temperierflächen ab. Die beiden scheibenartigen Körper besitzen auf den beiden einander zugekehrten Seiten in jeder Massekammer radial angeordnete und im wesentlichen von innen nach außen durchgehende Stege, die eine Mischwirkung auf die Masse ausüben sollen. Es besteht jedoch die Gefahr, daß sich hier zwischen den scheibenartigen Körpern tote Zonen bilden, in denen sich Masse ablagert, so daß die beiden scheibenartigen Körper nur noch auf ihren den Temperierflächen zugekehrten Außenseiten von Masse überströmt werden. Eine nennenswerte Mischwirkung auf die Masse in der Massekammer wird über diese beiden Scheiben nicht ausgeübt. Temperaturfühler für die Masse greifen ausschließlich radial außen in Temperierräume ein, und zwar zwischen den beiden scheibenartigen Körpern. Diese Anordnungsstelle liegt damit immer innerhalb einer Zone, niemals jedoch am Ende einer Zone bzw. zwischen zwei Zonen, sodaß damit eine genaue Temperaturmessung am Ende einer Zone auch nicht möglich ist. Auch hier wird die Temperaturmessung im Teillastbetrieb durch Strömungsverlagerung, Kurzschlußströmung o. dgl. zusätzlich verfälscht.

Der Erfindung liegt die Aufgabe zugrunde, eine Vorrichtung der eingangs beschriebenen Art aufzuzeigen, bei der eine möglichst genaue und repräsentative Temperaturmessung der Masse, insbesondere zwischen zwei Zonen, bei Nennleistung wie auch im Teillastbetrieb möglich ist.

Erfindungsgemäß wird dies bei einer Vorrichtung der eingangs beschriebenen Art dadurch erreicht, daß zwischen zwei benachbarten Temperierräumen eine gesonderte Abstandsscheibe vorgesehen ist, die den radial innen angeordneten Massedurchgang aufweist, und daß sich der Temperaturfühler radial von außen nach innen durch die Abstandsscheibe erstreckt und in dem Massedurchgang in der Abstandsscheibe zwischen zwei benachbarten Temperierräumen endet.

Die Erfindung geht von dem Gedanken aus, den Temperaturfühler radial innen anzuordnen und damit inkauf zu nehmen, daß der Temperaturfühler vergleichsweise länger ausgebildet werden muß bzw. sich nicht mehr so einfach wie bisher anordnen läßt. Zusätzlich dazu ist es erforderlich, den Massedurchgang mit einem solchen Querschnitt auszustatten, der gegen eine Strömungsverlagerung im Teillastbetrieb, im Vergleich zu einem Betrieb der Vorrichtung unter Nennleistung, möglichst unempfindlich ist. Diese Forderungen erfüllt ein Massedurchgang mit einem kreisringförmigen Querschnitt wesentlich besser als ein Massedurchgang mit einem kreisförmigen Querschnitt. Die den Querschnitt begrenzenden Wandungen liegen bei einem Ringspalt wesentlich enger beieinander als bei einem kreisförmigen Querschnitt.

Der Temperaturfühler durchsetzt die Temperiersäule radial von außen nach innen im Bereich einer gesondert angeordneten Abstandsscheibe zwischen zwei benachbarten Temperierräumen. Die Abstandsscheibe weist auch den radial innen angeordneten Massedurchgang auf, sodaß sich der Temperaturfühler radial von außen nach innen durch die Abstandsscheibe erstreckt und in dem Massedurchgang in der Abstandsscheibe zwischen zwei benachbarten Temperierräumen endet. Damit wird die Ausbildung und Anordnung des Temperaturfühlers zwar etwas aufwendiger als bisher. Es können aber vorteilhaft ohnehin sinnvolle Elemente, insbesondere die gesonderte Abstandsscheibe, genutzt werden. So kann die Abstandsscheibe z. B. hohl ausgebildet und nicht an einen Kühlkreislauf angeschlossen sein, sondern gleichsam nur zur Unterbringung des Temperaturfühlers dienen. Es ist aber auch möglich, daß die Abstandsscheibe als Isolierscheibe ausgebildet ist. In diesen Fällen tritt der besondere Vorteil auf, daß die Temperatur der Masse stromauf zu dem Temperaturfühler nicht mehr verändert, sondern die Masse nur noch durchmischt und damit in ihrer Temperatur vergleichmäßigt wird. Dies ist besonders sinnvoll, wenn die Isolierscheibe zwischen zwei unterschiedlichen Temperierzonen angeordnet ist. Der Temperaturfühler kann aber auch in der Wandung der Abstandsscheibe angeordnet sein. Die Abstandsscheibe kann auch eine Hohlscheibe und einen Ausgleichsmodul aufweisen, also modular zusammengesetzt sein.

Das in dem zuerst durchflossenen der beiden benachbarten Temperierräume angeordnete Mischwerkzeug ist vorteilhaft als Scheibe ausgebildet, die nur auf ihrem äußeren Umfang Aussparungen für den Übertritt der Masse von der Unterseite der Scheibe auf deren Oberseite und auf ihren beiden Oberflächen eine Vielzahl von Mischschaufeln aufweist, die berührungslos an den Temperierflächen der Kammern entlangstreichen und dabei die Masse von der Temperierfläche abstreifen und durchmischen. Der Temperrieraum wird durch die Verwendung einer einzigen Scheibe in zwei voneinander getrennte Räume unterteilt, wobei die Scheibe am äußeren Umfang Aussparungen aufweist, die den Übertritt der Masse von der Unterseite der Scheibe auf die Oberseite der Scheibe ermöglichen. Sinnvoll ist es, wenn der Masseeingang, der Masseausgang und sämtliche Massedurchgänge an der Vorrichtung zentrisch, also radial innen, angeordnet sind. Die Aussparungen für den Übertritt der Masse an der Scheibe sind an allen Scheiben der Vorrichtung radial außen positioniert. Geringfügige Durchbrechungen in der Scheibe stören diesen Vorgang nicht sonderlich. Damit ist zunächst einmal sichergestellt, daß die Masse einer Zwangsströmung unterliegt, die auch im Teillastbetrieb aufrechterhalten wird. Damit wird die perfekte Zwangsströmung nach dem Prinzip des first in/first out realisiert. Die Förderwirkung auf die Masse im Sinne dieser Zwangsströmung wird von der Massepumpe erbracht. Auf der im wesentlichen über die Fläche durchgehenden einzigen Scheibe in jedem Temperierraum sind eine Vielzahl von Mischschaufeln vorgesehen. Bei diesen Mischschaufeln handelt es sich um relativ viele kleine Körper oder Elemente, die wandartig oder schaufelartig ausgebildet sind und deren Erstreckung wesentlich kleiner als der Radius der Scheibe ist. Diese Mischschaufeln sind unter relativ großer gegenseitiger Entfernung so auf der Oberseite und der Unterseite der Scheibe angeordnet, daß sie miteinander keine nennenswerte Kanalbildung erbringen, sondern die zu temperierende Masse gleichsam ablenken und umpflügen, so daß hieraus eine intensive Durchmischung der Masse resultiert. Die von den Mischschaufeln ausgeübte Förderwirkung für die Zwangsdurchströmung der Temperierräume ist vernachlässigbar. Die Mischschaufeln können zwar grundsätzlich so ausgebildet sein, wie dies für Mischschaufeln auf Rührarmen im Stand der Technik bereits bekannt ist. Durch ihr Zusammenwirken mit der einzigen Scheibe in jedem Temperierraum erbringen sie in der Kombination jedoch eine Wirkung, die die Vorteile der Zwangsführung und der intensiven Durchmischung ermöglicht, ohne deren Nachteile miteinander zu kombinieren. Es versteht sich, daß die Mischschaufeln neben der Mischfunktion auch die Abstreiffunktion der Masse von den Temperierflächen zu erbringen haben. Die Mischschaufeln müssen nicht radial zueinander angeordnet und ausgerichtet sein, wie dies bei ihrer Anordnung auf den Armen der Fall ist, sondern sie sind über die Fläche der Scheibe an der Oberseite und der Unterseite verteilt angeordnet. Diese verteilte Anordnung kann in verschiedener Weise erfolgen. Sinn dieser Verteilung ist es in allen Fällen, die einzelnen Massebereiche immer wieder intensiv zu durchmischen, und zwar während der Zwangsführung auf der Unter- oder Oberseite der Scheibe radial von außen nach innen bzw. von innen nach außen. Die wesentliche Wirkung der Mischschaufeln ist neben der Abstreifwirkung die Mischwirkung. Eine geringfügige Förderwirkung der Mischschaufeln ist jedoch unschädlich, gleichgültig, ob diese Förderwirkung in Förderrichtung oder entgegen der Förderrichtung auftritt. Die Masse wird so intensiv vermischt dem Ringspalt zugeleitet. Es resultiert eine exakte und repräsentative Messung der Temperatur durch den Temperaturfühler.

Die Mischschaufeln können eine kleinere Erstreckung als der Radius der Scheibe aufweisen und an der Oberseite und der Unterseite der Scheibe über den Umfang der Scheibe ohne gegenseitige Kanalbildung verteilt angeordnet sein. Dies fördert die Durchmischung macht so die Temperaturmessung genauer.

Auf der Oberseite und der Unterseite der Scheibe können jeweils zwei Arten der Mischschaufeln über den Umfang der Scheibe verteilt vorgesehen sein, von denen die eine Art auf die Masse eine radial nach außen gerichtete und die andere Art eine radial nach innen gerichtete Mischbewegung ausübt. Gerade durch dieses Gegeneinanderarbeiten der beiden Arten von Mischschaufeln wird die intensive Mischung der Masse verstärkt, und zwar sowohl im Bereich der Unterseite der Scheibe wie auch im Bereich der Oberseite der Scheibe. Die Anordnung der Mischschaufeln an der Scheibe kann durchaus symmetrisch zu der Ebene der Scheibe sein. Die Masse nimmt infolge der intensiven Durchmischung in allen Querschnitten eine zum Stand der Technik vergleichsweise konstantere Temperatur an. Damit kann bei Anwendung in einer Kristallisierzone gezielt auf eine hinreichende Vorkristallisierung durch Bildung von Kristallkeimen in hinreichender Anzahl Einfluß genommen werden.

Die Mischschaufeln können als reine Mischschaufeln ohne nennenswerte Förderwirkung ausgebildet sein. Die Zwangsförderung der Masse durch den Temperierraum wird im wesentlichen von der Massepumpe erbracht, die ohnehin bei einer solchen Vorrichtung vorgesehen ist.

Die Erfindung wird anhand verschiedener Ausführungsbeispiele weiter erläutert und beschrieben. Es zeigen:
- Fig. 1: einen Vertikalschnitt durch die Vorrichtung mit einer ersten Anordnung des Temperaturfühlers,
- Fig. 2: eine weitere Möglichkeit der Anordnung und Unterbringung des Temperaturfühlers, und
- Fig. 3: eine weitere Möglichkeit der Anordnung und Unterbringung des Temperaturfühlers.

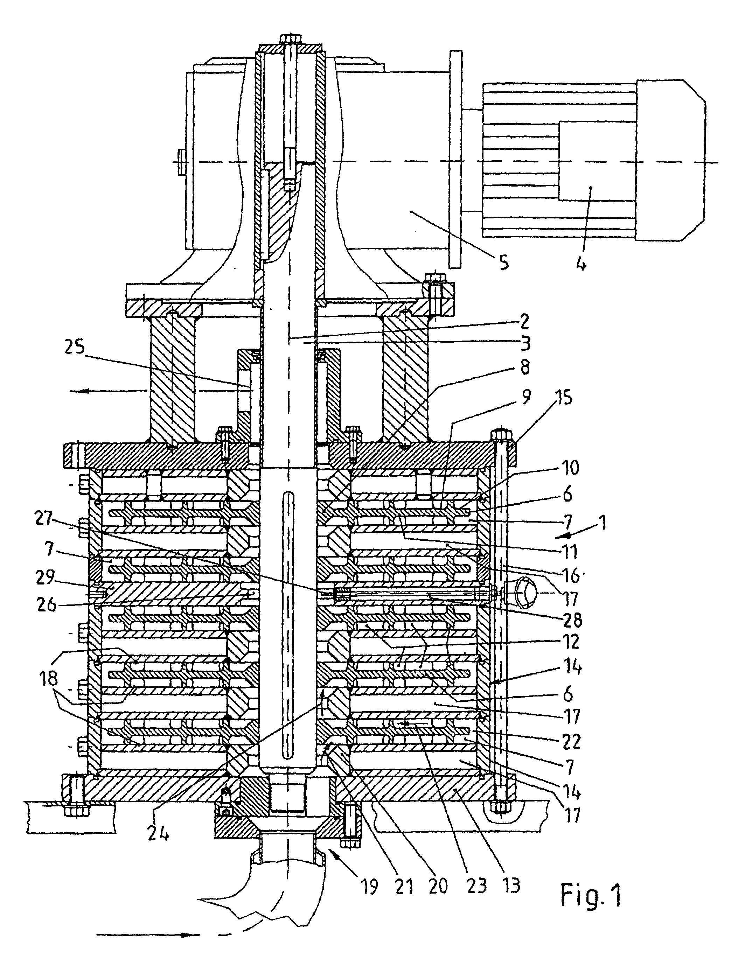

Fig. 1 zeigt den grundsätzlichen Aufbau der einzelnen Elemente der Vorrichtung, die manchmal auch als Scheibentemperer bezeichnet wird, weil mehrere scheibenartige Gebilde zu einer Temperiersäule 1 aufgebaut sind. Die Temperiersäule 1 besitzt eine vertikal angeordnete Achse 2, in der eine Antriebswelle 3 im wesentlichen über die Höhe der Vorrichtung durchgehend vorgesehen ist. Die Antriebswelle 3 wird über einen Motor 4 und ein nachgeschaltetes Untersetzungsgetriebe 5 rotierend angetrieben. Mit der Antriebswelle 3 sind Scheiben 9 aufweisende Mischwerkzeuge 6 drehfest verbunden, die jeweils in Temperierräumen 7 umlaufend angeordnet sind. Die Rühr- oder Mischwerkzeuge 6 erfüllen eine rührende bzw. vermischende Wirkung auf die Masse. Jede Scheibe 9 weist radial innen eine Nabe 8 auf, die wie dargestellt über eine Paßfederverbindung drehfest mit der Antriebswelle 3 verbunden ist. Die Nabe 8 geht radial nach außen in einen im wesentlichen flächig ausgebildeten Grundkörper der Scheibe 9 über. Die Scheibe 9 bzw. der Grundkörper ist im wesentlichen eben ausgebildet, besitzt eine vergleichsweise kleinere Höhe als der Temperierraum 7 und ist in dessen Mitte angeordnet. Der Grundkörper der Scheibe 9 erstreckt sich im wesentlichen über die gesamte Fläche, d. h. er bildet eine Kreisringfläche. Der Grundkörper bzw. die Scheibe 9 weist eine Oberseite 10 und eine Unterseite 11 auf. Sowohl auf der Oberseite 10 wie auch auf der Unterseite 11 der Scheibe 9 sind Mischschaufeln 12 angeordnet. Die Mischschaufeln 12 sind in radialer Richtung und in Umfangsrichtung über die Oberseite 10 und die Unterseite 11 verteilt angeordnet. In Fig. 1 erkennbar, daß hier insgesamt fünf Scheiben 9 vorgesehen sind, die mit der Antriebswelle 3 drehfest verbunden sind und in soweit gemeinsam angetrieben werden.

Auch der stillstehende Teil der Vorrichtung bzw. der Temperiersäule 1 ist scheiben- bzw. abschnittartig aufgebaut. Auf einem unteren Deckel 13 sind eine Anzahl Ringe 14 übereinander aufgebaut und von einem oberen Deckel 15 mit über den Umfang angeordneten Spannschrauben 16 gehalten. In jedem Ring 14 ist eine Kammer 17 gebildet, die von einem Temperiermedium, meist Wasser, durchflossen wird. Die einzelnen übereinander befindlichen Kammern 17 sind in der Regel an unterschiedlich temperierte Kreisläufe angeschlossen und insoweit gruppenweise zusammengefaßt, wobei üblicherweise von unten nach oben eine Kühlzone, eine Kristallisationszone und eine Nachwärmzone gebildet werden. Die Darstellung der Kreisläufe und deren Anschluß an die einzelnen Kammern 17 ist hier aus Übersichtlichkeitsgründen weggelassen. Jede Kammer 17 besitzt in der Regel 2 Temperierflächen 18. Diese Temperierflächen 18 sind die freien Oberflächen der Temperierräume 7 an denen also Wärme an die durchfließende Masse abgegeben oder von der durchfließenden Masse aufgenommen wird. Zentral am unteren Deckel 13 und diesen durchsetzend ist eine Masseeingang 19 ausgebildet durch den die aufgeschmolzene Schokolademasse mit Hilfe einer nicht dargestellten Pumpe durch die Temperiersäule 1 von unten nach oben hindurchgefördert wird.

Die Masse wird zunächst mit Hilfe einer Buchse 20, die die Welle 3 mit Abstand umgibt durch den Bereich der Kammer 17 geleitet und tritt dann gemäß Pfeil 21 in den untersten Temperierraum 7 ein, und zwar in den Teil des Temperierraums 7, der sich unterhalb der Scheibe 9 des Mischwerkzeuges 6 erstreckt. Die Masse kann hier nicht auf die Oberseite 10 der Scheibe 6 übertreten, sondern ist gezwungen, sich entlang der untersten Temperierfläche 18 in dem Raum zwischen der Unterseite 11 der untersten Scheibe 9 und der untersten Temperierfläche 18 radial von innen nach außen zu bewegen, wobei die Masse von den dort angeordneten Mischschaufeln 12 einerseits von der untersten Temperierfläche 18 abgestreift und andererseits mit anderen Masseeinheiten intensiv durchmischt wird. Radial außen an der Scheibe 6 sind eine oder mehrere Aussparungen 22 vorgesehen, durch die hindurch die von der Pumpe geförderte Masse nunmehr in den Bereich der Oberseite 10 der untersten Scheibe 6 übertreten kann, also in den Teil des Temperierraumes 7, der zwischen der Oberseite 10 der untersten Scheibe 9 und der Temperierfläche 18 der zweituntersten Kammer 17 gebildet wird. In diesem Bereich bewegt sich nun die Masse gemäß Pfeil 23 im wesentlichen radial von außen nach innen, wobei sie auch hier über die auf der Oberseite 10 der Scheibe 9 angeordneten Mischschaufeln 12 von der Temperierfläche 18 abgenommen und intensiv durchmischt wird. Radial innen tritt dann die Masse über die nächste Buchse 20 gemäß Pfeil 24 in den zweituntersten Temperierraum 7 über. Auch an der zweituntersten Scheibe 9 wiederholt sich der beschriebene Vorgang. Die Masse bewegt sich in dem unterhalb der Unterseite 11 gebildeten Teilraum radial von innen nach außen und in dem oberhalb der Oberseite 10 der Scheibe 9 gebildeten Teilraum radial von außen nach innen. Dieser Vorgang wiederholt sich an jeder nachfolgenden Scheibe 9 bzw. in jedem nachfolgenden Temperierraum 7 von unten nach oben, bis die Masse schließlich an einem zentral angeordneten Masseausgang 25 austritt und von dort eine Verarbeitungsstelle, beispielsweise einer Überziehmaschine zugeführt wird. Man erkennt, daß bei dieser Ausführungsform der Masseeingang 19, die Buchsen 20 und der Masseausgang 25 zentral, also radial innen angeordnet sind, wobei die Buchsen 20 die inneren Verbindungs- bzw. Übertrittsstellen für die Masse, also radial innen liegende Massedurchgänge 26 bilden, während radial außen an den Scheiben 9 die Aussparungen 22 die Möglichkeit eröffnen, daß die Masse dort jeweils von der Unterseite auf die Oberseite der Scheibe 9 übertritt. Die Masse durchströmt damit die Temperierräume 7 in Zwangsströmung. Es bilden sich keine Nester oder tote Zonen. Sämtliche Masseelemente durchströmen die Temperiersäule 1 gleichmäßig, d. h. jedes Masseelement wird in einem gleichen Zeitraum durch die Temperiersäule 1 hindurchgeführt, so daß das Prinzip first in /first out verwirklicht ist.

In Verbindung damit ist es von besonderer Bedeutung, die Temperatur der Masse möglichst genau und repräsentativ zu messen bzw. zu überwachen, um beispielsweise die Steuerung bzw. Regelung der Temperierkreisläufe hiervon abhängig zu machen. Wichtig ist es beispielsweise, die Temperatur der Masse am Übergang von der Kristallisierzone in die Nachwärmzone genau und repräsentativ zu messen. Die Messung kann aber auch an anderen Stellen der Vorrichtung, beispielsweise am Ende der Kühlzone, durchgeführt werden. Wichtig ist, daß die Temperatur in einem radial innen liegenden Massedurchgang 26 gemessen wird, also an einer Stelle, an der ein ringspaltförmig ausgebildeter Massedurchgang 26 vorgesehen ist. Ein solcher ringspaltförmiger Massedurchgang ist weit weniger gegen Strömungsverlagerung bei Teilbelastung der Vorrichtung anfällig als z. B. ein Massedurchgang mit kreisförmiger Durchtrittsfläche. Dennoch sollte der Abstand der den ringspaltförmigen Massedurchgang 26 begrenzenden Elemente nicht allzu klein sein, damit dieser Ringspalt auch bei Teillastbetrieb der Vorrichtung sicher durchströmt wird. Dies ist radial innen der Fall, weshalb ausschließlich ein solcher radial innen liegender Massedurchgang 26 für die Temperaturmessung herangezogen wird. Zu diesem Zweck ist ein Temperaturfühler 27 so angeordnet, daß er repräsentativ in den ringspaltförmigen Massedurchgang 26 einragt. Der Temperaturfühler 27 weist Zuleitungen 28 auf, die gemäß Fig. 1 radial von außen nach innen in Richtung auf die Antriebswelle 3 sich erstreckend untergebracht sind. Für die Anordnung und Unterbringung des Temperaturfühlers 27 ist eine gesonderte Abstandsscheibe 29 vorgesehen. Die Abstandsscheibe 29 besitzt etwa halbe Höhe der sonst verwendeten Module zur Bildung der Temperierräume 7 und Kammern 17. Auch ein benachbarter Temperierraum 7 kann die halbe normale Modulhöhe aufweisen. Die Abstandsscheibe 29 ist an keinen Temperierkreislauf angeschlossen. Sie dient also nicht der temperaturmäßigen Beeinflussung der Masse, sondern im Gegenteil, sie hat die Aufgabe, den Temperaturfühler 27 mit seinen Zuleitungen 28 zu halten und genau im Ringspalt des Massedurchgangs 26 zu halten. In Verbindung mit den als Scheiben 9 ausgebildeten Mischwerkzeugen 6 der beiden benachbarten Temperierräume 7 wird der besondere Vorteil erreicht, daß das stromauf angeordnete Mischwerkzeug 6 mit seinen auf der Oberseite 10 angeordneten Mischschaufeln 12 am Ende beispielsweise der Kristallisationszone die Temperatur der Masse nicht mehr verändert, sondern über die entsprechend vorgesehene Strecke von radial außen nach radial innen ganz bewußt lediglich eine intensive Durchmischung der Masse erbringt. Die Masse wird also bewußt in ihrer Temperatur vergleichmäßigt dem ringspaltförmigen Massedurchgang 26 und damit dem Temperaturfühler 27 zugeleitet. Auf diese Art und Weise wird die Temperatur der Masse besonders genau und repräsentativ für die Anordnungsstelle gemessen. Die Abstandsscheibe 29 kann als Metallscheibe ausgebildet sein. Sie schließt auf ihren beiden Seiten jeweils an einen Temperierraum 7 an. Auf beiden Seiten findet eine Durchmischung der Masse ohne wesentliche Temperaturbeeinflussung statt. Im Beharrungszustand wird deshalb auch eine aus Metall ausgebildete Abstandsscheibe 29 die Temperatur der Masse im Massedurchgang 26 annehmen. Auch dies macht die Temperaturmessung genauer.

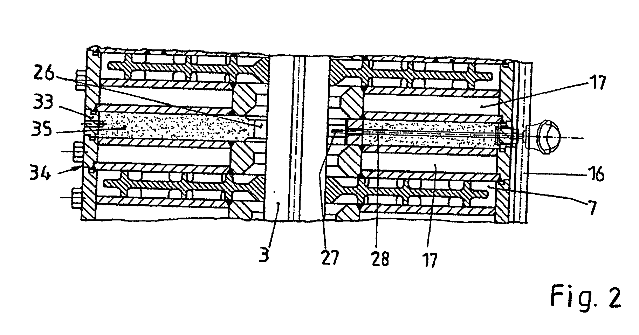

Bei der Ausführungsform gemäß Fig. 2 ist eine gesonderte Hohlscheibe 33 in den modularen Aufbau der Vorrichtung eingeschaltet. Hierzu gehört ein Ausgleichsmodul 34 mit etwa halber Modulhöhe, der eine Kammer 17 bildet bzw. bereitstellt, die ebenso wie die Kammer 17 des stromab angeordneten Moduls beispielsweise je an einen Temperierkreislauf angeschlossen sind. Die Hohlscheibe 33 dient der temperaturgeschützten Unterbringung des Temperaturfühlers 27 im Massedurchgang 26 sowie der Anordnung der Zuleitungen 28 des Temperaturfühlers 27 radial von außen nach innen. Die Hohlscheibe 33 kann auch mit einem wärmeisolierenden Material 35 gefüllt oder als Isolierscheibe ausgebildet sein, um auch damit eine Trennung zwischen zwei Temperierkreisläufen zu ermöglichen. Dabei ist es wichtig, daß die Hohlscheibe 33 bzw. der Temperaturfühler 27 genau zwischen zwei benachbarten Kammern 17 angeordnet ist, also an einer Stelle, die besonders repräsentativ für die Temperaturmessung ist.

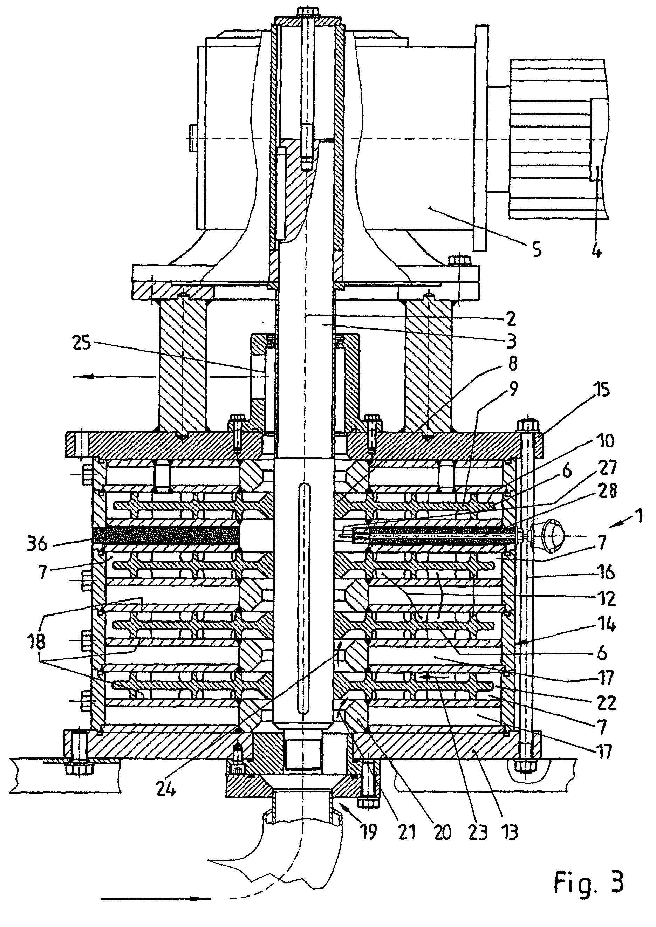

Fig. 3 zeigt eine weitere Ausführungsform unter Darstellung der wesentlichen Elemente der gesamten Vorrichtung. Der Temperaturfühler 27 ist mit seinen Zuleitungen 28 radial von außen nach innen sich erstreckend vorgesehen. Der Temperaturfühler 27 ist in einer Isolierscheibe 36 untergebracht. Es kann sich hierbei um die Kammer 17 eines normal aufgebauten Moduls handeln, die nicht an einen Temperierkreislauf angeschlossen, sondern mit isolierendem Material 35 gefüllt ist oder aus einem solchen Material besteht. Der Temperaturfühler 27 ist auf beiden Seiten von Temperierräumen 7 umgeben, also zwischen zwei benachbarten Temperierräumen 7 angeordnet, obwohl die Masse temperaturmäßig im Bereich des Temperaturfühlers 27 nicht behandelt wird. Diese Vorrichtung weist damit insbesondere die Vorteile auf, die bereits anhand des Ausführungsbeispiels der Fig. 1 beschrieben wurden. Auch hier findet stromauf und stromab der Anordnungsstelle des Temperaturfühlers 27 lediglich eine intensive Durchmischung der Masse mit entsprechender Vergleichmäßigung der Temperatur statt.

### BEZUGSZEICHENLISTE

- 1 -: Temperiersäule
- 2 -: Achse
- 3 -: Antriebswelle
- 4 -: Motor
- 5 -: Untersetzungsgetriebe
- 6 -: Mischwerkzeug
- 7 -: Temperierraum
- 8 -: Nabe
- 9 -: Scheibe
- 10 -: Oberseite
- 11 -: Unterseite
- 12 -: Mischschaufeln
- 13 -: Deckel
- 14 -: Ring
- 15 -: Deckel
- 16 -: Spannschraube
- 17 -: Kammer
- 18 -: Temperierfläche
- 19 -: Masseeingang
- 20 -: Buchse
- 21 -: Pfeil
- 22 -: Aussparung
- 23 -: Pfeil
- 24 -: Pfeil
- 25 -: Masseausgang
- 26 -: Massedurchgang
- 27 -: Temperaturfühler
- 28 -: Zuleitungen
- 29 -: Abstandsscheibe
- 30 - 31 - 32 - 33 -: Hohlscheibe
- 34 -: Ausgleichsmodul
- 35 -: Material
- 36 -: Isolierscheibe
- 37 - 38 -: Mittelebene
- 39 -: Durchbrechung

## Patentansprüche

1. Vorrichtung zum kontinuierlichen Aufbereiten von zu verarbeitenden kakaobutterhaltigen oder ähnlichen fetthaltigen Massen, insbesondere Schokolademasse, mit einer Temperiersäule (1), die mehrere, einen Zylinder bildende, übereinander angeordnete Kammern (17) aufweist, wobei jede Kammer (17) an einen Kreislauf für ein Temperiermedium angeschlossen ist, und je zwischen zwei benachbarten Kammern (17) ein in der Regel im wesentlichen von Temperierflächen (18) der beiden Kammern (17) begrenzter und von der Masse durchströmter Temperierraum (7) vorgesehen ist, in dem ein mit einer Antriebswelle (3) verbundenes Mischwerkzeug (6) angeordnet ist, wobei zwei benachbarte Temperierräume (7) über einen radial innen angeordneten Massedurchgang (26) aneinander angeschlossen sind, der als die Antriebswelle (3) umgebender Ringspalt ausgebildet ist und in den ein Temperaturfühler (27) einragt, **dadurch gekennzeichnet, daß** zwischen zwei benachbarten Temperierräumen (7) eine gesonderte Abstandsscheibe (29) vorgesehen ist, die den radial innen angeordneten Massedurchgang (26) aufweist, und daß sich der Temperaturfühler (27) radial von außen nach innen durch die Abstandsscheibe (29) erstreckt und in dem Massedurchgang (26) in der Abstandsscheibe (29) zwischen zwei benachbarten Temperierräumen (7) endet.

2. Vorrichtung nach Anspruch 1, **dadurch gekennzeichnet, daß** das in dem zuerst durchflossenen der beiden benachbarten Temperierräume (7) angeordnete Mischwerkzeug (6) als Scheibe (9) ausgebildet ist, die nur auf ihrem äußeren Umfang Aussparungen (22) für den Übertritt der Masse von der Unterseite (11) der Scheibe (9) auf deren Oberseite (10) und auf ihren beiden Oberflächen eine Vielzahl von Mischschaufeln (12) aufweist, die berührungslos an den Temperierflächen (18) der Kammern (17) entlangstreichen und dabei die Masse von der Temperierfläche (18) abstreifen und durchmischen.

3. Vorrichtung nach Anspruch 2, **dadurch gekennzeichnet, daß** die Mischschaufeln (12) eine kleinere Erstreckung als der Radius der Scheibe (9) aufweisen und an der Oberseite (10) und der Unterseite (11) der Scheibe (9) über den Umfang der Scheibe ohne gegenseitige Kanalbildung verteilt angeordnet sind.

4. Vorrichtung nach Anspruch 1, **dadurch gekennzeichnet, daß** die Abstandsscheibe (29) eine Hohlscheibe (33) und einen Ausgleichsmodul (34) aufweist.

5. Vorrichtung nach Anspruch 1, **dadurch gekennzeichnet, daß** die Abstandsscheibe (29) als Isolierscheibe (36) ausgebildet ist.

6. Vorrichtung nach einem der Ansprüche 1 bis 5, **dadurch gekennzeichnet, daß** auf der Oberseite (10) und der Unterseite (11) der Scheibe (9) jeweils zwei Arten der Mischschaufeln (12) über den Umfang der Scheibe (9) verteilt vorgesehen sind, von denen die eine Art auf die Masse eine radial nach außen gerichtete und die andere Art eine radial nach innen gerichtete Mischbewegung ausübt.

7. Vorrichtung nach Anspruch 6, **dadurch gekennzeichnet, daß** die Mischschaufeln (12) als reine Mischschaufeln ohne nennenswerte Förderwirkung ausgebildet sind.

## Claims

1. An apparatus for continuously preparing masses containing cacao butter or similar fat containing masses to be processed, especially chocolate mass, comprising a tempering column (1) including a plurality of chambers (17) forming a cylinder and being arranged one above the other, each chamber (17) being connected to a circuit for a tempering medium, and a tempering space (7) being provided between two adjacent chambers (7), the tempering space (7) usually being limited by tempering surfaces (18) of the two chambers (17) and the mass flowing through the tempering space (7), a mixing tool (6) connected to a driving shaft (3) being arranged in the tempering space (7), two adjacent tempering spaces (7) being connected to each other by a mass passage (26) being arranged in a radial inward direction, the mass passage (26) being designed as an annular gap surrounding the driving shaft (3) and such that a temperature sensor (27) protrudes into the mass passage (26), **characterised in that** a separate distance disk (29) is provided between two adjacent tempering spaces (7), the distance disk (29) including the mass passage (26) being arranged in a radial inward direction, and that the temperature sensor (27) extends through the distance disk (29) in a radial direction from the outside to the inside and ends in the mass passage (26) in the distance disk (29) between two adjacent tempering spaces (7).

2. The apparatus of claim 1, **characterised in that** the mixing tool (6) being arranged in the tempering space (7) of the two adjacent tempering spaces (7) through which tempering medium first flows is designed as a disk (9), the disk (9) only on its outer circumference including openings (22) for the passage of the mass from the bottom side (11) of the disk (9) to its top side (10), the disk (9) at its two surfaces including a majority of mixing blades (12) passing the tempering surfaces (18) of the chambers (17) without contact and thus wiping the mass off the tempering surface (18) and mixing the mass.

3. The apparatus of claim 2, **characterised in that** the mixing blades (12) have an extension which is less than the radius of said disk (9), and they are arranged at the top side (10) and at the bottom side (11) of the disk (9) distributed over the circumference and without mutual channels.

4. The apparatus of claim 1, **characterised in that** the distance disk (9) includes a hollow disk (33) and a compensating module (34).

5. The apparatus of claim 1, **characterised in that** the distance disk (9) is designed as an insulating disk (36).

6. The apparatus of one of claims 1 to 5, **characterised in that** two types of mixing blades (12) are distributed about the circumference of the disk (9) on each the top side (10) and the bottom side (11), one type effecting a mixing movement being directed radially in an outward direction, and the other type effecting a mixing movement being directed radially in an inward direction.

7. The apparatus of claim 6, **characterised in that** the mixing blades (12) are designed as pure mixing blades without substantial conveying effect.

## Revendications

1. Dispositif de préparation et mise en oeuvre de masses contenant du beurre de cacao ou des graisses analogues, en particulier de masse de chocolat, comprenant une colonne de températion (1) qui présente plusieurs chambres (17) disposées l'une au-dessus de l'autre formant un cylindre, chaque chambre (17) étant raccordée à un circuit de fluide de températion, et une chambre de températion (7) en général essentiellement limitée par les surfaces de températion (18) des deux chambres (17) et traversée par la masse étant prévue chaque fois entre deux chambres adjacentes (17), dans laquelle est disposé un outil de mélange (6) relié à un arbre d'entraînement (3), deux chambres de températion adjacentes (7) étant raccordées l'une à l'autre par un passage de masse (26) disposé radialement à l'intérieur qui est formé par l'espace annulaire entourant l'arbre d'entraînement (3) et dans lequel pénètre une sonde de température (27), **caractérisé en ce qu'**un disque d'écartement séparé (29) est prévu entre deux chambres de températion adjacentes (7), lequel présente le passage de masse (26) disposé radialement à l'intérieur, et **en ce que** la sonde de température (27) s'étend radialement de l'extérieur vers l'intérieur à travers le disque d'écartement (29) et se termine dans le passage de masse (26) dans le disque d'écartement (29) entre deux chambres de températion adjacentes (7).

2. Dispositif suivant la revendication 1, **caractérisé en ce que** l'outil de mélange (6) disposé dans la première des deux chambres de températion adjacentes (7) qui est traversée est formé comme disque (9), présentant uniquement à sa périphérie extérieure des évidements (22) pour le transfert de la masse de la face inférieure (11) du disque (9) à sa face supérieure (10) et sur les deux surfaces un grand nombre de palettes de mélange (12), qui passent sans contact le long des surfaces de températion (18) des chambres (17) et ce faisant raclent la masse de la surface de températion (18) et la mélangent.

3. Dispositif suivant la revendication 2, **caractérisé en ce que** les palettes de mélange (12) présentent une longueur inférieure au rayon du disque (9) et sont réparties à la périphérie du disque sur la face supérieure (10) et la face inférieure (11) du disque (9) sans former de canaux entre elles.

4. Dispositif suivant la revendication 1, **caractérisé en ce que** le disque d'écartement (29) présente un disque bombé (33) et un module de compensation (34).

5. Dispositif suivant la revendication 1, **caractérisé en ce que** le disque d'écartement (29) est conçu comme disque isolant (36).

6. Dispositif suivant l'une des revendications 1 à 5, **caractérisé en ce que** deux types de palettes de mélange (12) sont respectivement prévues réparties à la face supérieure (10) et à la face inférieure (11) du disque (9) sur la périphérie du disque (9), dont un type exerce un mouvement de mélange orienté radialement vers l'extérieur sur la masse et l'autre un mouvement de mélange orienté radialement vers l'intérieur.

7. Dispositif suivant la revendication 6, **caractérisé en ce que** les palettes de mélange (12) sont conçues comme pures palettes de mélange sans effet significatif de transport.
